# EUROPÄISCHE PATENTSCHRIFT

(11) **EP 1 519 850 B1**
(45) Veröffentlichungstag und Bekanntmachung des Hinweises auf die Patenterteilung: **25.04.2007**
(21) Anmeldenummer: 03762408.7
(22) Anmeldetag: 18.06.2003
(51) Int. Cl.: B60K 26/02, G05G 1/14, G05G 5/03

(54) **FAHRPEDALMODUL MIT STEUERBARER REIBEINRICHTUNG**
ACCELERATOR PEDAL MODULE WITH CONTROLLABLE FRICTION DEVICE
MODULE DE PEDALE DE L'ACCELERATEUR A DISPOSITIF DE FRICTION POUVANT ETRE COMMANDE

(30) Priorität: 08.07.2002 DE 10230724
(43) Veröffentlichungstag der Anmeldung: 06.04.2005
(73) Patentinhaber: SIEMENS AKTIENGESELLSCHAFT, 80333 München (DE)
(72) Erfinder: KOHLEN, Peter, 61267 Neu-Anspach (DE); REIMANN, Christian, 61273 Wehrheim (DE); VON WILLICH, Joachim, 65618 Selters (DE)
(86) Internationale Anmeldenummer: PCT/DE2003/002035
(87) Internationale Veröffentlichungsnummer: WO 2004/005063

(56) Entgegenhaltungen:
- WO-A-97/30863
- WO-A-98/14857
- DE-A- 10 042 549
- DE-A- 10 122 162
- US-A- 5 529 296
- US-A- 6 098 971

## Beschreibung

Die Erfindung bezieht sich auf eine Leistungssteuereinrichtung für Antriebsmotoren von Kraftfahrzeugen, mit einem Betätigungshebel, der von einer Betätigungskraft entgegen einer Rückholkraft aus einer Ruhelage um eine Schwenkachse schwenkbar beaufschlagbar ist und mit einer die Schwenkbewegung des Betätigungshebels dämpfenden Dämpfungseinrichtung, wobei die Dämpfungseinrichtung eine Reibeinrichtung ist, die ein Reibelement aufweist, durch das der Betätigungshebel und/oder ein Bauteil des Betätigungshebels derart beaufschlagbar ist, dass zur Schwenkbewegung des Betätigungshebels in sich aus der Ruhelage entfernender Richtung zusätzlich zur Rückholkraft eine Reibkraft überwindbar ist.

Bei derartigen Leistungssteuereinrichtungen ist es bekannt, die Schwenkbewegung des Betätigungshebels dadurch zu dämpfen, dass ab einer bestimmten Auslenkposition des Betätigungshebels zusätzlich zur Rückholkraft eine Federkraft in Rückstellrichtung auf den Betätigungshebel wirkt. Durch diese zu überwindende Kraftschwelle soll der Bedienperson des Betätigungshebels haptisch ein Signal vermittelt werden.

Dabei ist von der Bedienperson in dem Schwenkbereich des Betätigungshebels oberhalb der Kraftschwelle immer zusätzlich zur Rückholkraft die Federkraft aufzubringen, unabhängig davon, ob eine Schwenkbewegung erfolgt oder der Betätigungshebel in einer Auslenkposition gehalten wird.

Auch in Rückstellrichtung des Betätigungshebels bleibt in dem Schwenkbereich oberhalb der Kraftschwelle die zusätzliche Rückholkraft wirksam.
Leistungssteuereinrichtungen der eingangs genannten Art sind aus der DE 100 42 549 A und der US-A-6 098 971 bekannt, die festliegende Hysteresen der Pedalkraft über dem Pedalweg aufweisen.

DE 100 42 549 offenbart eine Leistungssteuereinrichtung nach dem Oberbegriff des Anspruch 1.

Aufgabe der Erfindung ist es daher eine Leistungssteuereinrichtung der eingangs genannten Art zu schaffen, durch die bei einer Schwenkbewegung des Betätigungshebels aus seiner Ruhelage eine Dämpfung nur während des Schwenkbewegungsvorgangs erfolgt.

Diese Aufgabe wird erfindungsgemäß dadurch gelöst, dass die Reibeinrichtung ein weiteres Reibelement aufweist, das den Betätigungshebel und/oder das Bauteil des Betätigungshebels mit einer zusätzlichen Reibkraft beaufschlagend manuell oder selbsttätig zuschaltbar angesteuert wird.

Dabei kann z.B. in einem Kraftfahrzeug abhängig von der Beschaffenheit der jeweils gefahrenen Fahrstrecke die Hysterese der Betätigungskraft über dem Auslenkweg des Betätigungshebels eingestellt werden, wodurch bei schlechten Fahrstrecken eine Dämpfung zum ruhig Halten des Betätigungshebels möglich ist.

Die ab einer bestimmten Auslenkposition des Betätigungshebels zusätzlich zur Rückholkraft zu überwindende Reibkraft muss nur dann aufgebracht werden, wenn tatsächlich ein Schwenkbewegungsvorgang des Betätigungshebels in Auslenkrichtung von der Ruhelage weg erfolgt und dabei auf eine bestimmte Situation aufmerksam gemacht werden soll.

Bei Halten des Betätigungshebels in einer Position oberhalb der bestimmten Auslenkposition ist von der Bedienperson nur eine der Rückholkraft entgegen wirkende Kraft aufzubringen, nicht aber eine zusätzliche Kraft, so dass der Betätigungshebel bei niedrigem Kraftniveau in dieser Auslenkposition gehalten werden kann.

Da aber bereits kleine Auslenkbewegungen des Betätigungshebels dazu führen, dass eine zusätzliche Reibkraft überwunden werden muss, kann der Betätigungshebel sehr ruhig in der Auslenkposition gehalten werden.

Durch eine konstante Reibkraft der Reibeinrichtung bleibt die Steigung der von der Bedienperson aufzubringenden Beaufschlagungskraft des Betätigungshebels über dessen gesamten Schwenkbereich bei einer durch eine Feder erzeugten Rückholkraft gleich.

Weiterhin kann die Reibeinrichtung abhängig von Betriebsparametern des Kraftfahrzeugs beaufschlagbar ansteuerbar sein.

Dabei kann die Reibeinrichtung abhängig von der Schwenkposition des Betätigungshebels und/oder abhängig von der Fahrgeschwindigkeit des Kraftfahrzeugs und/oder abhängig von einem Abstand des Kraftfahrzeugs zu einem vorausfahrenden anderen Fahrzeug und/oder von der Schwenkgeschwindigkeit des Betätigungshebels·beaufschlagbar ansteuerbar sein.

Um Informationen zu derartigen Betriebsparametern zu erhalten, kann durch einen Winkelsensor die Schwenkposition des Betätigungshebels, durch einen Fahrgeschwindigkeitssensor die Fahrgeschwindigkeit des Kraftfahrzeugs, von einem Abstandssensor der Abstand zu einem vorausfahrenden anderen Fahrzeug und von einem Bewegungssensor die Schwenkgeschwindigkeit des Betätigungshebels erfassbar sein.

Zur selbsttätigen Ansteuerung der Reibeinrichtung ist vorzugsweise von einer elektronischen Steuereinheit ein Ansteuersignal erzeugbar und mit dem Ansteuersignal die Reibeinrichtung ansteuerbar.

Dazu ist von dem Winkelsensor und/oder dem Fahrgeschwindigkeitssensor und/oder dem Abstandssensor und/oder dem Bewegungssensor ein Signal erzeugbar und der elektronischen Steuereinheit zuleitbar, von der das von diesem Signal abhängige Ansteuersignal zum Ansteuern der Reibeinrichtung erzeugbar ist.

Weitere haptische Informationen über bestimmte Fahrsituationen erhält die Bedienperson des Betätigungshebels dadurch, dass der elektronischen Steuereinheit ein Schlupfsignal einer Antischlupfregeleinrichtung und/oder ein Setzgeschwindigkeitssignal einer Geschwindigkeitsregeleinrichtung und/oder einer Geschwindigkeitsbegrenzungseinrichtung zuleitbar ist, von der das von diesen Signalen abhängige Ansteuersignal zum Ansteuern der Reibeinrichtung erzeugbar ist.

Ist bei Schwenkbewegung des Betätigungshebels in sich der Ruhelage nähernden Richtung die Dämpfungseinrichtung von der Betätigungseinrichtung entkoppelbar, wird sichergestellt, dass bei Nichtbeaufschlagung des Betätigungshebels dieser sich ungehindert und schnell in seine Ruhelage bewegt. Gefährliche Fahrsituationen durch ein nicht oder nur langsames Zurückstellen des Betätigungshebels in seine Ruhelage werden somit vermieden.

In Rückstellrichtung der Bewegung des Betätigungshebels wirkt nur die Rückstellkraft.

Dazu kann das Reibelement außer Eingriff von dem Betätigungshebel und/oder dem Bauteil des Betätigungshebels bringbar sein.

Eine Möglichkeit dazu besteht darin, dass das Bauteil des Betätigungshebels über eine Kupplung mit dem Betätigungshebel verbindbar ist, wobei die Kupplung eine Reibkupplung oder eine Zahnkupplung oder eine Klauenkupplung sein kann.

Eine einfache Ausbildung wird dazu dadurch erreicht, dass der Betätigungshebel fest auf einer zur Schwenkachse koaxialen, schwenkbar gelagerten Schwenkwelle angeordnet ist, die mit der Dämpfungseinrichtung verbunden oder verbindbar ist.

Dabei kann auf der Schwenkwelle eine Kupplungsscheibe fest angeordnet sein, mit der ein dazu koaxial frei drehbar gelagertes Reibrad der Reibeinrichtung durch die Kupplung kuppelbar ist, wobei das Reibrad von dem Reibelement beaufschlagbar ist.

Zur Entkopplung der Dämpfungseinrichtung von dem Betätigungshebel kann zwischen dem Kupplungsbereich des Reibrades und dem von dem Reibelement beaufschlagbaren Bereich des Reibrades ein Freilauf angeordnet sein, der den Kupplungsbereich bei einer Schwenkbewegung des Betätigungshebels in sich der Ruhelage nähernden Richtung von dem von dem Reibelement beaufschlagbaren Bereich entkoppelt und bei entgegengesetzter Schwenkbewegung des Betätigungshebels drehfest koppelt.

Auf der Schwenkwelle kann ein Reibrad der Reibeinrichtung angeordnet sein, das von dem Reibelement beaufschlagbar ist, wobei vorzugsweise das Reibelement an einem um eine Schwenkachse schwenkbaren Schwenkhebel angeordnet ist, der von einem Schwenkantrieb schwenkbar antreibbar ist.

Eine ebenfalls einfach aufgebaute Möglichkeit zur Entkopplung der Dämpfungseinrichtung von dem Betätigungshebel besteht darin, dass zwischen der Schwenkwelle und dem Reibrad ein Freilauf angeordnet ist, der das Reibrad bei einer Schwenkbewegung des Betätigungshebels in sich der Ruhelage nähernden Richtung von der Schwenkwelle entkoppelt und bei entgegengesetzter Schwenkbewegung des Betätigungshebels drehfest koppelt.

Der Freilauf kann ein Hülsenfreilauf sein.

Auf der Schwenkwelle kann ein weiteres Reibrad fest angeordnet sein, das von einem weiteren Reibelement beaufschlagbar ist.

Ist dabei das weitere Reibelement an einem um eine feste Schwenkachse schwenkbaren Schwenkhebel angeordnet, der von einem Ende einer Feder mit dem Reibelement in Anlage an dem weiteren Reibrad beaufschlagt ist, deren anderes Ende an einem Hebelarm des Betätigungshebels abgestützt ist, so wird auf diese Weise die Rückholkraft erzeugt.

Ausführungsbeispiele der Erfindung sind der Zeichnung dargestellt und werden im folgenden näher beschrieben. Es zeigen
- Figur 1: eine Seitenansicht einer Prinzipdarstellung eines ersten Ausführungsbeispiels einer Leistungssteuereinrichtung
- Figur 2: eine Querschnittsansicht der Leistungssteuereinrichtung nach Figur 1
- Figur 3: eine Seitenansicht einer Prinzipdarstellung eines zweiten Ausführungsbeispiels einer Leistungssteuereinrichtung
- Figur 4: ein Diagramm der Pedalkraft über den Pedalweg der Leistungssteuereinrichtungen nach den Figuren 1 bis 3.

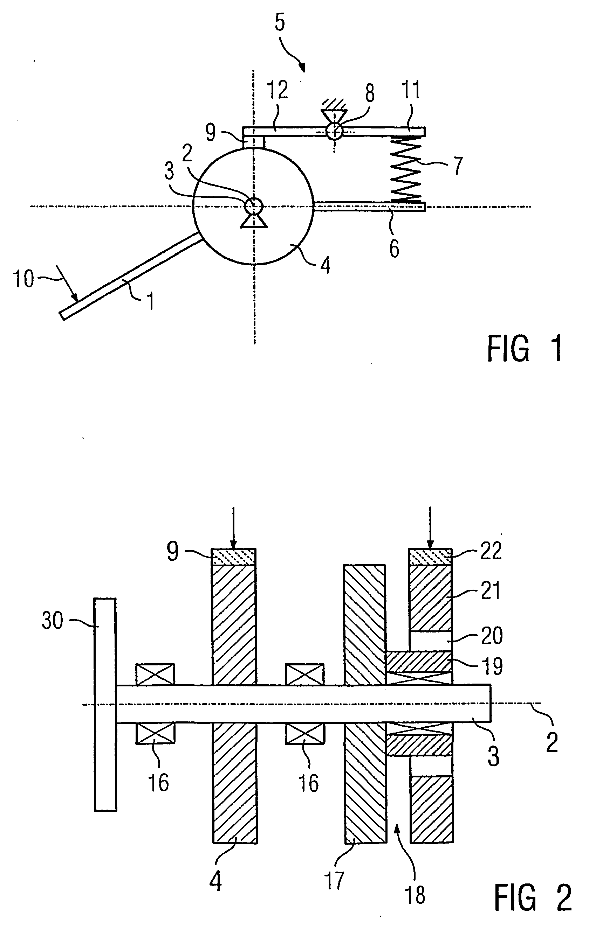

Die dargestellten Leistungssteuereinrichtungen weisen einen Betätigungshebel 1 eines Fahrpedals eines Kraftfahrzeugs auf, der durch manuelle Kraftbeaufschlagung aus einer Ruhelage (Figur 1) um eine Schwenkachse 2 schwenkbar ist. Der sich radial zur Schwenkachse 2 erstreckende Betätigungshebel 1 ist dabei mit einem Ende an einem ersten Reibrad 4 befestigt, das fest auf einer drehbar gelagerten, zur Schwenkachse 2 koaxialen Schwenkwelle 3 angeordnet ist.

Von dem Reibrad 4 ragt weiterhin radial ein Hebelarm 6 weg, an dessen freiem Ende eine Druckfeder 7 mit ihrem eine Ende abgestützt ist. Mit dem anderen Ende beaufschlagt die vorgespannte Druckfeder 7 den einen Arm 11 eines zweiarmigen Schwenkhebels 5, der um eine feste Schwenkachse 8 schwenkbar ist und an dessen zweitem Arm 12 ein Reibelement 9 angeordnet ist. Das Reibelement 9 wird durch die Beaufschlagung des Schwenkhebels 5 von der Druckfeder 7 an der radial umlaufenden Mantelfläche des Reibrads 4 mit Vorspannung in Anlage gehalten.

Bei Beaufschlagung des Betätigungshebels 1 von einer Pedalkraft 10 wird das Reibrad 4 aus seiner dargestellten Ruhelage entgegen dem Uhrzeigersinn verschwenkt. Der dabei ebenfalls verschwenkte Hebelarm 6 komprimiert dadurch die Druckfeder 7, so dass der erste Arm 11 von einer größeren Federkraft beaufschlagt wird. Damit wird aber auch das Reibelement 9 von einer größeren Kraft gegen das Reibrad 4 beaufschlagt, so dass mit sich vergrößernder Auslenkung aus der Ruhelage sowohl die von der Druckfeder 7 erzeugte Rückholkraft als auch die von dem Reibelement 9 am Reibrad erzeugte und zu überwindende Reibkraft ansteigt.

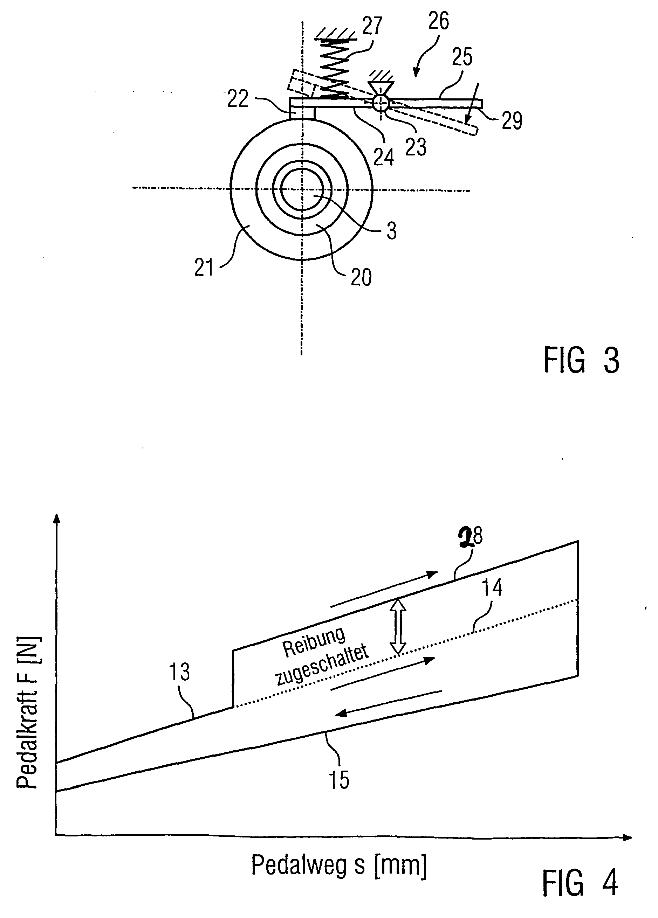

Wie in Figur 4 dargestellt ist, wird dabei eine Hysterese der Pedalkraft 10 über den Pedalweg erzielt, bei der die Pedalkraft auf einem höheren Niveau linear ansteigt. Dies ist durch die zunächst durchgehende obere Linie 13 dargestellt, die von der unterbrochenen Linie 14 fortgesetzt wird. Auf einem niedrigeren Niveau der Pedalkraft fällt diese entsprechend der unteren Linie 15 bei dem Zurückbewegen des Pedalhebels 1 zur Ruhelage hin wieder linear ab.

Wie in Figur 2 dargestellt ist, ist auf der mittels Lager 16 drehbar gelagerten Schwenkwelle 3 nicht nur das erste Reibrad 4 sondern auch eine Kupplungsscheibe 17 einer Reibkupplung 18 fest angeordnet.

Koaxial neben der Kupplungsscheibe 17 ist auf der Schwenkwelle 3 eine Kupplungshülse 19 frei drehbar gelagert, die durch einen Kupplungsantrieb mit ihrer einen als Reibfläche ausgebildeten Stirnseite gegen die ihr zugewandte ebenfalls als Reibfläche ausgebildete Stirnfläche der Kupplungsscheibe 17 pressbar ist.

Der Kupplungsantrieb kann jeder geeignete Antrieb sein. Eine Ausbildungsmöglichkeit besteht in der Verwendung eines elektromagnetischen Kupplungsantriebes.

Über einen auf der radial umlaufenden Mantelfläche der Kupplungshülse 19 angeordneten Hülsenfreilauf 20 ist koaxial zur Schwenkachse 2 ein zweites Reibrad 21 auf der Kupplungshülse 19 angeordnet. Durch den Hülsenfreilauf 20 wird bei einem Verdrehen der Kupplungshülse 19 in sich von der Ruhelage entfernenden Richtung das zweite Reibrad 21 von der Kupplungshülse 19 drehfest mitgenommen, während bei einem Verdrehen der Kupplungshülse 19 in sich der Ruhelage nähernden Richtung das zweite Reibrad 21 auf der Kupplungshülse 19 frei dreht.

Entsprechend dem ersten Reibrad 4 wird auch das zweite Reibrad 21 an seiner radial umlaufenden Mantelfläche von einem zweiten Reibelement 22 beaufschlagt, das an einem Arm 24 eines um eine fest angeordnete Schwenkachse 23 frei schwenkbaren Schwenkhebels 26 angeordnet ist und durch eine vorgespannte Druckfeder 27 gegen das zweite Reibrad 21 beaufschlagt ist.

Wird die Reibkupplung 18 geschlossen, so muss ab diesem Moment bei einer Auslenkbewegung des Betätigungshebels 1 zusätzlich zur Rückholkraft der Druckfeder 7 und der durch das Reibelement 9 erzeugten Reibkraft eine weitere, von dem Reibelement an dem zweiten Reibrad 21 erzeugte zusätzliche Reibkraft überwunden werden. Dies führt dazu, dass nicht eine Pedalkraft entsprechend der unterbrochenen Linie 14 in Figur 4, sondern entsprechend der dazu auf höherem Niveau verlaufenden Linie 28 aufgebracht werden muß, was von der Bedienperson haptisch erfassbar ist. Diese erhöhte Pedalkraft ist aber nur während des Schwenkbewegungsvorganges des Betätigungshebels 1 in sich von der Ruhelage entfernender Richtung aufzubringen. Bei Bewegung in Ruhelage erfolgt eine Entkopplung der zusätzlichen Reibkraft durch den Hülsenfreilauf 20. Auch bei Halten des Betätigungshebels 1 in einer Position ist nur noch die Rückholkraft der Druckfeder 7 aufzubringen.

Durch das Schließen der Reibkupplung 18 wird die Auslenkposition bestimmt, ab der die zusätzliche Reibkraft des das zweite Reibrad 21 beaufschlagenden zweiten Reibelements 22 aufzubringen ist.

Dazu kann die Reibkupplung 18 abhängig von den verschiedensten Betriebsparametern des Kraftfahrzeugs oder aber abhängig von einer bestimmten Schwenkposition des Betätigungshebels 1 schließbar ansteuerbar sein. Eine solche bestimmte Schwenkposition kann von einem Winkelsensor an einer Positionsscheibe 30 erfasst werden, die fest mit der Schwenkwelle 3 verbunden ist.

Figur 3 zeigt eine andere Möglichkeit zum Zuschalten der aufzubringenden zusätzliche Reibkraft. Anstatt der Reibkupplung 18 in dem Ausführungsbeispiel der Figuren 1 und 2 ist das zweite Reibrad über einen Hülsenfreilauf direkt auf der Schwenkwelle 2 angeordnet. Der Schwenkhebel 26 ist dabei ein zweiarmiger Schwenkhebel 26, dessen erster Arm 24 das Reibelement 22 trägt und dessen zweiter Arm 25 entgegen der Kraft der Druckfeder 27 von einem nicht dargestellten Schwenkantrieb mit einer Entkopplungskraft 24 beaufschlagbar ist, die das Reibelement von dem Reibrad 21 abhebt (unterbrochene Linie). Die Ansteuerung des Schwenkantriebs kann entsprechend der Ansteuerung der Reibkupplung 18 erfolgen.

## Patentansprüche

1. Leistungssteuereinrichtung für Antriebsmotoren von Kraftfahrzeugen, mit einem Betätigungshebel (1), der von einer Betätigungskraft entgegen einer Rückholkraft aus einer Ruhelage um eine Schwenkachse schwenkbar beaufschlagbar ist und mit einer die Schwenkbewegung des Betätigungshebels dämpfenden Dämpfungseinrichtung, wobei die Dämpfungseinrichtung eine Reibeinrichtung ist, die ein Reibelement (9) aufweist, durch das der Betätigungshebel (1) und/oder ein Bauteil des Betätigungshebels derart beaufschlagbar ist, dass zur Schwenkbewegung des Betätigungshebels in sich aus der Ruhelage entfernender Richtung zusätzlich zur Rückholkraft eine Reibkraft überwindbar ist, **dadurch gekennzeichnet, dass** die Reibeinrichtung ein weiteres Reibelement (22) aufweist, das den Betätigungshebel und/oder das Bauteil des Betätigungshebels mit einer zusätzlichen Reibkraft beaufschlagend manuell oder selbsttätig zuschaltbar angesteuert wird.

2. Leistungssteuereinrichtung nach Anspruch 1, **dadurch gekennzeichnet, dass** die Reibeinrichtung abhängig von Betriebsparametern des Kraftfahrzeugs beaufschlagbar ansteuerbar ist.

3. Leistungssteuereinrichtung nach Anspruch 2, **dadurch gekennzeichnet, dass** die Reibeinrichtung abhängig von der Schwenkposition des Betätigungshebels (1) und/oder abhängig von der Fahrgeschwindigkeit des Kraftfahrzeugs und/oder abhängig von einem Abstand des Kraftfahrzeugs zu einem vorausfahrenden anderen Fahrzeug und/oder von der Schwenkgeschwindigkeit des Betätigungshebels (1) beaufschlagbar ansteuerbar ist.

4. Leistungssteuereinrichtung nach Anspruch 3, **dadurch gekennzeichnet, dass** durch einen Winkelsensor die Schwenkposition des Betätigungshebels (1) erfassbar ist.

5. Leistungssteuereinrichtung nach Anspruch 3, **dadurch gekennzeichnet, dass** durch einen Fahrgeschwindigkeitssensor die Fahrgeschwindigkeit des Kraftfahrzeugs erfassbar ist.

6. Leistungssteuereinrichtung nach Anspruch 3, **dadurch gekennzeichnet, dass** von einem Abstandssensor der Abstand zu einem vorausfahrenden anderen Fahrzeug erfassbar ist.

7. Leistungssteuereinrichtung nach Anspruch 3, **dadurch gekennzeichnet, dass** von einem Bewegungssensor die Schwenkgeschwindigkeit des Betätigungshebels erfassbar ist.

8. Leistungssteuereinrichtung nach einem der vorhergehenden Ansprüche, **dadurch gekennzeichnet, dass** von einer elektronischen Steuereinheit ein Ansteuersignal erzeugbar und mit dem Ansteuersignal die Reibeinrichtung ansteuerbar ist.

9. Leistungssteuereinrichtung nach einem der Ansprüche 4 bis 8, **dadurch gekennzeichnet, dass** von dem Winkelsensor und/oder dem Fahrgeschwindigkeitssensor und/oder dem Abstandssensor und/oder dem Bewegungssensor ein Signal erzeugbar und der elektronischen Steuereinheit zuleitbar ist, von der das von diesem Signal abhängige Ansteuersignal zum Ansteuern der Reibeinrichtung erzeugbar ist.

10. Leistungssteuereinrichtung nach einem der vorhergehenden Ansprüche, **dadurch gekennzeichnet, dass** der elektronischen Steuereinheit ein Schlupfsignal einer Antischlupfregeleinrichtung und/oder ein Setzgeschwindigkeitssignal einer Geschwindigkeitsregeleinrichtung und/oder einer Geschwindigkeitsbegrenzungseinrichtung zuleitbar ist, von der das von diesen Signalen abhängige Ansteuersignal zum Ansteuern der Reibeinrichtung erzeugbar ist.

11. Leistungssteuereinrichtung nach einem der vorhergehenden Ansprüche, **dadurch gekennzeichnet, dass** bei Schwenkbewegung des Betätigungshebels (1) in sich der Ruhelage nähernden Richtung die Dämpfungseinrichtung von dem Betätigungshebel (1) entkoppelbar ist.

12. Leistungssteuereinrichtung nach Anspruch 11, **dadurch gekennzeichnet, dass** das Reibelement (22) außer Eingriff von dem Betätigungshebel und/oder dem Bauteil des Betätigungshebels (1) bringbar ist.

13. Leistungssteuereinrichtung nach einem der vorhergehenden Ansprüche, **dadurch gekennzeichnet, dass** das Bauteil des Betätigungshebels (1) über eine Kupplung mit dem Betätigungshebel (1) verbindbar ist.

14. Leistungssteuereinrichtung nach Anspruch 13, **dadurch gekennzeichnet, dass** die Kupplung eine Reibkupplung (18) oder eine Zahnkupplung oder eine Klauenkupplung ist.

15. Leistungsteuerereinrichtung nach einem der Ansprüche 11 bis 14, **dadurch gekennzeichnet, dass** der Betätigungshebel (1) fest auf einer zur Schwenkachse (2) koaxialen, schwenkbar gelagerten. Schwenkwelle. (3) angeordnet ist, die mit der Dämpfungseinrichtung verbunden oder verbindbar ist.

16. Leistungssteuereinrichtung nach Anspruch 15, **dadurch gekennzeichnet, dass** auf der Schwenkwelle (3) eine Kupplungsscheibe (17) fest angeordnet ist, mit der ein dazu koaxial frei drehbar gelagertes Reibrad (21) der Reibeinrichtung durch die Kupplung kuppelbar ist, wobei das Reibrad (21) von dem Reibelement (22) beaufschlagbar ist.

17. Leistungssteuereinrichtung nach den Ansprüchen 11 und 16, **dadurch gekennzeichnet, dass** zwischen dem Kupplungsbereich des Reibrades (21) und dem von dem Reibelement (22) beaufschlagbaren Bereich des Reibrades (21) ein Freilauf angeordnet ist, der den Kupplungsbereich bei einer Schwenkbewegung des Betätigungshebels (1) in sich der Ruhelage nähernden Richtung von dem von dem Reibelement (22) beaufschlagbaren Bereich entkoppelt und bei entgegengesetzter Schwenkbewegung des Betätigungshebels (1) drehfest koppelt.

18. Leistungssteuereinrichtung nach Anspruch 15, **dadurch gekennzeichnet, dass** auf der Schwenkwelle (3) ein Reibrad (21) der Reibeinrichtung angeordnet ist, das von dem Reibelement (22) beaufschlagbar ist.

19. Leistungssteuereinrichtung nach Anspruch 18, **dadurch gekennzeichnet, dass** das Reibelement (22) an einem um eine Schwenkachse (23) schwenkbaren Schwenkhebel (1) angeordnet ist, der von einem Schwenkantrieb schwenkbar antreibbar ist.

20. Leistungssteuereinrichtung nach einem der Ansprüche 11 und 18 bis 19, **dadurch gekennzeichnet, dass** zwischen der Schwenkwelle (3) und dem Reibrad (21) ein Freilauf angeordnet ist, der das Reibrad (21) bei einer Schwenkbewegung des Betätigungshebels (1) in sich der Ruhelage nähernden Richtung von der Schwenkwelle (3) entkoppelt und bei entgegengesetzter Schwenkbewegung des Betätigungshebels (1) drehfest koppelt.

21. Leistungssteuereinrichtung nach einem der Ansprüche 17 und 20, **dadurch gekennzeichnet, dass** der Freilauf ein Hülsenfreilauf (20) ist.

22. Leistungssteuereinrichtung nach Anspruch 15, **dadurch gekennzeichnet, dass** auf der Schwenkwelle (3) ein weiteres Reibrad (4) fest angeordnet ist, das von einem weiteren Reibelement (9) beaufschlagbar ist.

23. Leistungssteuereinrichtung nach Anspruch 22, **dadurch gekennzeichnet, dass** das weitere Reibelement (9) an einem um eine feste Schwenkachse (8) schwenkbaren Schwenkhebel (5) angeordnet ist, der von einem Ende einer Feder (7) mit dem Reibelement (9) in Anlage an dem weiteren Reibrad (4) beaufschlagt ist, deren anderes Ende an einem Hebelarm (6) des Betätigungshebels (1) abgestützt ist.

## Claims

1. Power control device for drive motors of motor vehicles, having an operating lever (1) which can be actuated by an operating force, so that from a rest position it can pivot about a pivot axis against a return force, and having a damping device damping the pivoting motion of the operating lever, the damping device being a friction device, which has a friction element (9), which is capable of acting on the operating lever (1) and/or a component of the operating lever in such a way that for the pivoting motion of the operating lever in a direction away from the rest position a friction force can be overcome in addition to the return force, **characterized in that** the friction device has a further friction element (22) which is activated manually or automatically so as to act on the operating lever and/or the component of the lever with an additional friction force.

2. Power control device according to Claim 1, **characterized in that** the friction device can be activated as a function of operating parameters of the motor vehicle.

3. Power control device according to Claim 2, **characterized in that** the friction device can be activated as a function of the pivoting position of the operating lever (1) and/or as a function of the road speed of the motor vehicle and/or as a function of a distance between the motor vehicle and another moving vehicle in front and/or of the pivoting speed of the operating lever (1).

4. Power control device according to Claim 3, **characterized in that** the pivoting position of the operating lever (1) can be detected by an angle sensor.

5. Power control device according to Claim 3, **characterized in that** the road speed of the motor vehicle can be detected by a road speed sensor.

6. Power control device according to Claim 3, **characterized in that** the distance from another moving vehicle in front can be detected by a distance sensor.

7. Power control device according to Claim 3, **characterized in that** the pivoting speed of the operating lever can be detected by a motion sensor.

8. Power control device according to any one of the preceding claims, **characterized in that** an activation signal can be generated by an electronic control unit and the friction device can be activated by the activation signal.

9. Power control device according to any one of Claims 4 to 8, **characterized in that** a signal can be generated by the angle sensor and/or the road speed sensor and/or the distance sensor and/or the motion sensor, and fed to the electronic control unit, which is capable of generating the activation signal for activation of the friction device as a function of this signal.

10. Power control device according to any one of the preceding claims, **characterized in that** a wheel-slip signal from a traction control system and/or a set speed from a cruise control system and/or a speed governor can be fed to the electronic control unit, which is capable of generating the activation signal for activation of the friction device as a function of these signals.

11. Power control device according to any one of the preceding claims, **characterized in that** the damping device can be decoupled from the operating lever (1) during a pivoting motion of the operating lever (1) in a direction towards the rest position.

12. Power control device according to Claim 11, **characterized in that** the friction element (22) can be disengaged from the operating lever and/or the component of the operating lever (1).

13. Power control device according to any one of the preceding claims, **characterized in that** the component of the operating lever (1) can be connected to the operating lever (1) by way of a clutch.

14. Power control device according to Claim 13, **characterized in that** the clutch is a friction clutch (18) or a geared clutch or a claw clutch.

15. Power control device according to any one of Claims 11 to 14, **characterized in that** the operating lever (1) is firmly arranged on a pivotally supported pivot shaft (3) coaxial with the pivot axis (2), said shaft being connected or capable of connection to the damping device.

16. Power control device according to Claim 15, **characterized in that** a clutch disc (17), to which a friction wheel (21) of the friction device, coaxially supported and freely rotatable therewith, can be coupled by the clutch, is firmly arranged on the pivot shaft (3), the friction element (22) being capable of acting on the friction wheel (21) .

17. Power control device according to Claims 11 and 16, **characterized in that** a freewheel, which during a pivoting motion of the operating lever (1) in a direction towards the rest position decouples the clutch area from the area capable that can be acted upon by the friction element (22), and rotationally locks them together during a pivoting movement of the operating lever (1) in the opposite direction, is arranged between the clutch area of the friction wheel (21) and the area of the friction wheel (21) that can be acted upon by the friction element (22).

18. Power control device according to Claim 15, **characterized in that** a friction wheel (21) of the friction device, which can be acted upon by the friction element (22), is arranged on the pivot shaft (3).

19. Power control device according to Claim 18, **characterized in that** the friction element (22) is arranged on a pivoted lever (1), which is capable of pivoting about a pivot axis (23) and can be pivotably driven by a pivot drive.

20. Power control device according to any one of Claims 11 and 18 to 19, **characterized in that** a freewheel, which decouples the friction wheel (21) from the pivot shaft (3) during a pivoting motion of the operating lever (1) in a direction towards the rest position and rotationally locks them together during a pivoting motion of the operating lever (1) in the opposite direction, is arranged between the pivot shaft (3) and the friction wheel (21).

21. Power control device according to either of Claims 17 and 20, **characterized in that** the freewheel is a sleeve-type freewheel (20).

22. Power control device according to Claim 15, **characterized in that** the a further friction wheel (4), which can be acted upon by a further friction element (9), is firmly arranged on the pivot shaft (3).

23. Power control device according to Claim 22, **characterized in that** the further friction element (9) is arranged on a pivoted lever (5), which is capable of pivoting about a fixed pivot axis (8) and is acted upon by one end of a spring (7) with the friction element (9) bearing on the further friction wheel (4), the other end of which spring is supported on a lever arm (6) of the operating lever (1).

## Revendications

1. Dispositif de commande de la puissance destiné à des moteurs d'entraînement de véhicules automobiles, comportant un levier de manoeuvre (1), qui peut être soumis à une force de manoeuvre opposée à une force de rappel et pivoter autour d'un axe de pivotement à partir d'une position de repos, et un système d'amortissement qui freine le mouvement de pivotement du levier de manoeuvre, le système d'amortissement étant un dispositif à friction qui comporte un élément de friction (9) par lequel le levier de manoeuvre (1) et/ou une pièce du levier de manoeuvre est soumis à un effort de telle manière que, pour permettre le mouvement de pivotement du levier de manoeuvre dans la direction l'éloignant de la position de repos, en plus de la force de rappel, il faut surmonter une force de friction, **caractérisé par le fait que** le dispositif à friction comporte un autre élément de friction (22), qui est commandé en enclenchement, manuellement ou automatiquement, et qui applique sur le levier de manoeuvre et/ou sur la pièce du levier de manoeuvre une force de friction supplémentaire.

2. Dispositif de commande de la puissance selon la revendication 1, **caractérisé par le fait que** le dispositif à friction peut être commandé en fonction de paramètres de fonctionnement du véhicule automobile.

3. Dispositif de commande de la puissance selon la revendication 2, **caractérisé par le fait que** le dispositif à friction peut être commandé par une force en fonction de la position de pivotement du levier de manoeuvre (1) et/ou en fonction de la vitesse de marche du véhicule automobile et/ou en fonction de la distance du véhicule automobile par rapport à un autre véhicule le précédant et/ou en fonction de la vitesse de pivotement du levier de manoeuvre (1).

4. Dispositif de commande de la puissance selon la revendication 3, **caractérisé par le fait que** la position de pivotement du levier de manoeuvre (1) peut être détectée par un capteur angulaire.

5. Dispositif de commande de la puissance selon la revendication 3, **caractérisé par le fait que** la vitesse de marche du véhicule automobile peut être détectée par un capteur de vitesse.

6. Dispositif de commande de la puissance selon la revendication 3, **caractérisé par le fait que** la distance par rapport à un autre véhicule le précédant peut être détectée par un capteur d'écartement.

7. Dispositif de commande de la puissance selon la revendication 3, **caractérisé par le fait que** la vitesse de pivotement du levier de manoeuvre peut être détectée par un capteur de déplacement.

8. Dispositif de commande de la puissance selon l'une des revendications précédentes, **caractérisé par le fait que** le signal de commande peut être généré par une unité électronique de commande et que le dispositif à friction peut être commandé par le signal de commande.

9. Dispositif de commande de la puissance selon l'une des revendications 4 à 8, **caractérisé par le fait qu'**un signal peut être généré par le capteur angulaire et/ou par le capteur de vitesse de marche et/ou par le capteur d'écartement et/ou par le capteur de déplacement et que ledit signal peut être appliqué à l'unité électronique de commande, laquelle peut générer le signal de commande dépendant de ce signal et destiné à commander le dispositif à friction.

10. Dispositif de commande de la puissance selon l'une des revendications précédentes, **caractérisé par le fait qu'**un signal de patinage provenant d'un dispositif de régulation antipatinage et/ou un signal d'assignation de vitesse provenant d'un dispositif de régulation de la vitesse et/ou d'un dispositif de limitation de vitesse peut être appliqué à l'unité électronique de commande, laquelle peut générer le signal de commande dépendant de ces signaux et destiné à commander le dispositif à friction.

11. Dispositif de commande de la puissance selon l'une des revendications précédentes, **caractérisé par le fait que**, dans le cas d'un mouvement de pivotement du levier de manoeuvre (1) dans la direction se rapprochant de la position de repos, le système d'amortissement peut être découplé du levier de manoeuvre (1).

12. Dispositif de commande de la puissance selon la revendication 11, **caractérisé par le fait que** l'élément de friction (22) peut être amené hors de prise du levier de manoeuvre et/ou de la pièce du levier de manoeuvre (1).

13. Dispositif de commande de la puissance selon l'une des revendications précédentes, **caractérisé par le fait que** la pièce du levier de manoeuvre (1) peut être liée au levier de manoeuvre (1) par l'intermédiaire d'un embrayage.

14. Dispositif de commande de la puissance selon la revendication 13, **caractérisé par le fait que** l'embrayage est un embrayage à friction (18) ou un embrayage à denture ou un embrayage à crabotage.

15. Dispositif de commande de la puissance selon l'une des revendications 11 à 14, **caractérisé par le fait que** le levier de manoeuvre (1) est monté fixe sur un arbre de pivotement (3) suspendu en pivotement d'une façon coaxiale à l'axe de pivotement, lequel arbre de pivotement est lié ou peut être lié au système d'amortissement.

16. Dispositif de commande de la puissance selon la revendication 15, **caractérisé par le fait qu'**un disque d'embrayage (17) est monté fixe sur l'arbre de pivotement (3) et qu'avec ledit disque d'embrayage, une roue de friction (21) du dispositif à friction, montée coaxialement et en rotation libre, peut être couplée par l'embrayage, ladite roue de friction (21) pouvant, en même temps, être assujettie à l'élément de friction (22).

17. Dispositif de commande de la puissance selon les revendications 11 et 16, **caractérisé par le fait que**, entre la zone d'accouplement de la roue de friction (21) et la zone de la roue de friction (21) pouvant être assujettie à l'élément de friction (22), est disposée une roue libre qui, lors d'un mouvement de pivotement du levier de manoeuvre (1) dans la direction rapprochant de la position de repos, découple la zone d'accouplement de la zone pouvant être assujettie à l'élément de friction (22) et, lors d'un mouvement de pivotement du levier de manoeuvre (1) dans la direction opposée, les couple en blocage de rotation.

18. Dispositif de commande de la puissance selon la revendication 15, **caractérisé par le fait que**, sur l'arbre de pivotement (3), est montée une roue de friction (21) du dispositif à friction, laquelle peut être assujettie à l'élément de friction (22).

19. Dispositif de commande de la puissance selon la revendication 18, **caractérisé par le fait que** l'élément de friction (22) est monté sur un levier de pivotement (1) pouvant pivoter autour d'un axe de pivotement (23) et pouvant être entraîné en pivotement par un entraînement de pivotement.

20. Dispositif de commande de la puissance selon l'une des revendications 11 et 18 à 19, **caractérisé par le fait que**, entre l'arbre de pivotement (3) et la roue de friction (21), est disposée une roue libre qui, lors d'un mouvement de pivotement du levier de manoeuvre (1) dans la direction rapprochant de la position de repos, découple la roue de friction (21) de l'arbre de pivotement (3) et, lors d'un mouvement de pivotement du levier de manoeuvre (1) dans la direction opposée, la couple en blocage de rotation.

21. Dispositif de commande de la puissance selon l'une des revendications 17 et 20, **caractérisé par le fait que** la roue libre est une roue libre à douille (20).

22. Dispositif de commande de la puissance selon la revendication 15, **caractérisé par le fait que**, sur l'arbre de pivotement (3), est montée fixe une autre roue de friction (4), qui peut être assujettie à un autre élément de friction (9).

23. Dispositif de commande de la puissance selon la revendication 22, **caractérisé par le fait que** l'autre élément de friction (9) est monté sur un levier de pivotement (5) pouvant pivoter autour d'un axe fixe de pivotement (8), ledit levier de pivotement étant appliqué sur l'autre roue de friction (4) par une extrémité d'un ressort (7) portant l'élément de friction (9), dont la deuxième extrémité s'appuie sur un bras de levier (6) du levier de manoeuvre (1) .
